# EUROPEAN PATENT APPLICATION

(11) **EP 4 354 601 A1**
(43) Date of publication of application: **17.04.2024**
(21) Application number: 21960942.7
(22) Date of filing: 20.10.2021
(51) Int. Cl.: H01M 50/107, H01M 50/152, H01M 50/167, H01M 50/183, H01M 10/613

(54) **BATTERY CELL, BATTERY, POWER CONSUMING DEVICE, AND METHOD AND APPARATUS FOR MANUFACTURING BATTERY CELL**

(71) Applicant: Contemporary Amperex Technology Co., Limited, Fujian PRC 352100 (CN)
(72) Inventor: CHAI, Zhisheng, Ningde, Fujian 352000 (CN); ZOU, Yang, Ningde, Fujian 352000 (CN); CHI, Qingkui, Ningde, Fujian 352000 (CN)
(74) Representative: Herrmann, Uwe
(86) International application number: PCT/CN2021/125112
(87) International publication number: WO 2023/065191

(57) **Abstract**

Some embodiments of this application provide a battery cell, a battery, an electrical device, and a method and device for manufacturing a battery cell, and relate to the field of batteries. The battery cell includes a housing, an electrode assembly, and an end cap. The housing includes a sidewall and a bottom wall. The sidewall encloses the bottom wall on all sides. The sidewall and the bottom wall jointly define an accommodation cavity with an opening made at one end. The electrode assembly is disposed in the accommodation cavity. The end cap is configured to cover the opening. The sidewall includes a body portion and an end portion. The body portion is connected to the bottom wall. The end portion is connected to an end of the body portion, the end being away from the bottom wall. An outer peripheral surface of the end cap is welded to an inner surface of the end portion. A first stepped face is formed between the inner surface of the end portion and an inner surface of the body portion. The first stepped face is configured to restrict the end cap from moving closer to the bottom wall. The first stepped face is formed on the inner surface of the housing of the battery cell. The first stepped face can define the position of the end cap during mounting of the end cap, and can block out a laser beam during the welding between the outer peripheral surface of the end cap and the inner surface of the end portion, so as to prevent the laser beam from burning the electrode assembly.

## Description

### TECHNICAL FIELD

This application relates to the field of batteries, and in particular, to a battery cell, a battery, an electrical device, and a method and device for manufacturing a battery cell.

### BACKGROUND

Batteries are widely applied in the field of new energy, for example, to electric vehicles, new energy vehicles, and so on. New energy vehicles and electric vehicles have become a new trend in the development of the automotive industry. Currently, a battery is packaged by two main methods. One method is to connect an end cap and a housing of the battery by seaming, and the other method is to weld the end cap and the housing by laser welding. A yield rate of batteries packaged by welding is low.

### SUMMARY

An objective of some embodiments of this application is to provide a battery cell, a battery, an electrical device, and a method and device for manufacturing a battery cell, with a view to alleviating the problem of a low yield rate of batteries that are packaged by welding.

According to a first aspect, an embodiment of this application provides a battery cell. The battery cell includes a housing, an electrode assembly, and an end cap. The housing includes a sidewall and a bottom wall. The sidewall encloses the bottom wall on all sides. The sidewall and the bottom wall jointly define an accommodation cavity with an opening made at one end. The electrode assembly is disposed in the accommodation cavity. The end cap is configured to cover the opening. The sidewall includes a body portion and an end portion. The body portion is connected to the bottom wall. The end portion is connected to an end of the body portion, the end being away from the bottom wall. An outer peripheral surface of the end cap is welded to an inner surface of the end portion. A first stepped face is formed between the inner surface of the end portion and an inner surface of the body portion. The first stepped face is configured to restrict the end cap from moving closer to the bottom wall.

In the above technical solution, the sidewall and the bottom wall of the housing define an accommodation cavity configured to accommodate the electrode assembly. The electrode assembly is accommodated in the accommodation cavity. The end cap closes off the opening of the accommodation cavity to isolate the electrode assembly from the external environment. The first stepped face is formed between the inner surface of the end portion of the housing and the inner surface of the body portion. The end cap is opposite to the first stepped face. The first stepped face can not only define the position of the end cap during mounting of the end cap, but also block out a laser beam during the welding between the outer peripheral surface of the end cap and the inner surface of the end portion, so as to prevent the electrode assembly from being irradiated by the laser beam and avoid burning of the electrode assembly.

In an optional technical solution put forward in an embodiment of this application, the end cap abuts against the first stepped face.

In the above technical solution, metal vapor is generated during the laser welding. By letting the end cap abut against the first stepped face, a gap is avoided between the end cap and the first stepped face, thereby restricting the metal vapor from entering the accommodation cavity, and preventing the metal vapor from damaging the electrode assembly in the accommodation cavity.

In an optional technical solution put forward in an embodiment of this application, the end cap includes an end cap body, an edge portion, and a connecting portion. The end cap body is connected to the edge portion by the connecting portion. An outer peripheral surface of the edge portion is connected to the inner surface of the end portion. The connecting portion extends outward from the end cap body along a radial direction of the housing and toward the bottom wall. The edge portion extends away from the bottom wall from the connecting portion.

In the above technical solution, the connecting portion connects the end cap body and the edge portion, the connecting portion extends outward from the end cap body along the radial direction of the housing and toward the bottom wall, and the edge portion extends away from the bottom wall from the connecting portion. This is equivalent to forming a recess on a side close to the bottom wall on the end cap, thereby increasing the space enclosed by the end cap and the body portion, and increasing the energy density of the battery cell.

In an optional technical solution put forward in an embodiment of this application, along a direction away from the bottom wall, a side of the end cap body, away from the bottom wall, does not protrude beyond the end portion.

In the above technical solution, the side of the end cap body, away from the bottom wall, is caused not to protrude beyond the end portion, so that the battery cell is more compact without wasting space in a box when being put into the box. For example, if the side of the end cap body, away from the bottom wall, protrudes beyond the end portion, an unusable gap is generated between the box and the end portion when the battery cell is put into the box, thereby wasting the space in the box.

In an optional technical solution put forward in an embodiment of this application, the side of the end cap body, away from the bottom wall, is flush with the end portion.

In the above technical solution, the side of the end cap body, away from the bottom wall, is caused to be flush with the end portion, so that the battery cell is more compact without wasting space in the box when being put into the box. In addition, when the side of the end cap body, away from the bottom wall, is flush with the end portion, the end cap body and the end portion can jointly support the battery cell, so that the battery cell is not prone to fall askew. Moreover, the end cap can be positioned onto the end portion more precisely during the mounting.

In an optional technical solution put forward in an embodiment of this application, the end portion includes a first part and a second part. The second part is connected to the body portion by the first part. The first part extends away from the bottom wall from the body portion. The outer peripheral surface of the end cap is welded to an inner surface of the first part. The second part extends inward from the first part along the radial direction of the housing and covers a weld position between the end cap and the first part.

In the above technical solution, the weld position is prone to rust due to exposure to moisture in the air. The second part is extended inward from the first part along the radial direction of the housing to shield the weld position between the end cap and the first part, protect the weld position, reduce the possibility of exposing the weld position to the moisture in the air, and prolong the service life of the battery cell.

In an optional technical solution put forward in an embodiment of this application, a bulge is formed at an end of the second part, the end being away from the first part. The bulge is hooked to a side of the edge portion, the side being oriented toward the connecting portion.

In the above technical solution, the second part is caused to shield the weld position between the end cap and the first part, so that the bulge is hooked to the side of the edge portion, the side being oriented toward the connecting portion, thereby improving the effect of shielding the weld position between the end cap and the first part, further reducing the possibility of exposing the weld position to the moisture in the air, and prolonging the service life of the battery cell.

In an optional technical solution put forward in an embodiment of this application, a nick is made on the inner surface of the end portion. The nick is located between the first part and the second part.

In the above technical solution, the nick is made between the first part and the second part, so that the first part and the second part can be formed by just bending the end portion at the nicked position during manufacturing. With the nick made, it is easy to ensure that the position of the first part and the position of the second part are consistent between a plurality of housings manufactured, thereby ensuring consistency of the process. In addition, by adjusting the position of the nick, the dimensions of the second part can be adjusted.

In an optional technical solution put forward in an embodiment of this application, the battery cell further includes a sealing layer. The sealing layer is located between the second part and the edge portion.

In the above technical solution, the sealing layer is disposed between the second part and the edge portion to isolate the weld position from the air, avoid rust generated at the weld position due to contact with the moisture in the air, and prolong the service life of the battery cell.

In an optional technical solution put forward in an embodiment of this application, an angle between the connecting portion and the edge portion is α, satisfying 30° ≤ α ≤ 65°.

In the above technical solution, if the angle α between the connecting portion and the edge portion is less than 30°, the connecting portion will block a current collection plate of the battery cell. If the angle α between the connecting portion and the edge portion is larger than 65°, a distance between the end cap body and the bottom wall is relatively small, that is, the space enclosed by the end cap and the body portion is relatively small. Therefore, the energy density of the battery cell is relatively low.

According to a second aspect, an embodiment of this application further provides a battery. The battery includes the battery cell according to any one of the technical solutions described above.

In an optional technical solution put forward in an embodiment of this application, an outer surface of the end portion protrudes beyond an outer surface of the body portion to form a second stepped face between the outer surface of the end portion and the outer surface of the body portion. The battery further includes a thermal management component. The thermal management component is positioned on the second stepped face and is in contact with the outer surface of the body portion.

In the above technical solution, the outer surface of the end portion is caused to protrude beyond the outer surface of the body portion to form the second stepped face between the outer surface of the end portion and the outer surface of the body portion. The second stepped face may be configured to hold a thermal management component so that the thermal management component can be positioned. Moreover, with the thermal management component positioned on the second stepped face, the thermal management component is enabled to be in contact with the outer surface of the body portion to facilitate heat exchange between the thermal management component and the electrode assembly in the body portion, so as to control the temperature of the electrode assembly.

In an optional technical solution put forward in an embodiment of this application, a width of the second stepped face in a radial direction of the housing is less than a half of a thickness of the thermal management component.

In the above technical solution, by causing the width of the second stepped face in the radial direction of the housing to be less than a half of the thickness of the thermal management component, it is convenient to dispose the thermal management component between two battery cells, so that the thermal management component fits closely with the body portions of both battery cells concurrently. When the width of the second stepped face in the radial direction of the housing is greater than a half of the width of the thermal management component, the thermal management component disposed between two battery cells is in close contact with the body portion of just one battery cell, but is in clearance fit with the body portion of the other battery cell.

According to a third aspect, an embodiment of this application further provides an electrical device. The electrical device includes the battery. The battery is configured to supply electrical energy.

According to a fourth aspect, an embodiment of this application further provides a method for manufacturing a battery cell. The method for manufacturing a battery cell includes: providing a housing, where the housing includes a sidewall and a bottom wall, the sidewall encloses the bottom wall on all sides, the sidewall and the bottom wall jointly define an accommodation cavity with an opening made at one end, the sidewall includes a body portion and an end portion, the body portion is connected to the bottom wall, the end portion is connected to an end of the body portion, the end is away from the bottom wall, and a first stepped face is formed between an inner surface of the end portion and an inner surface of the body portion; providing an electrode assembly; providing an end cap; putting the electrode assembly into the accommodation cavity through the opening, covering the opening with the end cap, and restricting, through the first stepped face, the end cap from moving closer to the bottom wall; and welding an outer peripheral surface of the end cap to the inner surface of the end portion along an axial direction of the housing.

According to a fifth aspect, an embodiment of this application further provides a device for manufacturing a battery cell. The device for manufacturing a battery cell includes: a first providing apparatus, a second providing apparatus, a third providing apparatus, a first assembling apparatus, and a second assembling apparatus. The first providing apparatus is configured to provide a housing, where the housing includes a sidewall and a bottom wall, the sidewall encloses the bottom wall on all sides, and the sidewall and the bottom wall jointly define an accommodation cavity with an opening made at one end. The sidewall includes a body portion and an end portion. The body portion is connected to the bottom wall. The end portion is connected to an end of the body portion, the end being away from the bottom wall. A first stepped face is formed between an inner surface of the end portion and an inner surface of the body portion. The second providing apparatus is configured to provide an electrode assembly. The third providing apparatus is configured to provide an end cap. The first assembling apparatus is configured to put the electrode assembly into the accommodation cavity through the opening, cover the opening with the end cap, and restrict, through the first stepped face, the end cap from moving closer to the bottom wall. The second assembling apparatus is configured to weld an outer peripheral surface of the end cap to the inner surface of the end portion along an axial direction of the housing.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic structural diagram of a vehicle according to some embodiments of this application;
FIG. 2 is an exploded view of a battery according to some embodiments of this application;
FIG. 3 is an overall schematic diagram of a battery cell according to some embodiments of this application;
FIG. 4 is a schematic front view of a battery cell according to some embodiments of this application;
FIG. 5 is a cross-sectional view of FIG. 4 sectioned along a line V-V;
FIG. 6 is a close-up view of a position VI shown in FIG. 5;
FIG. 7 is a schematic front view of a battery cell according to some other embodiments of this application;
FIG. 8 is a cross-sectional view of FIG. 7 sectioned along a line VIII-VIII;
FIG. 9 is a close-up view of a position IX shown in FIG. 8;
FIG. 10 is a schematic front view of a battery cell according to some other embodiments of this application;
FIG. 11 is a cross-sectional view of FIG. 10 sectioned along a line XI-XI;
FIG. 12 is a close-up view of a position XII shown in FIG. 11;
FIG. 13 is a schematic front view of a battery cell according to still other embodiments of this application;
FIG. 14 is a cross-sectional view of FIG. 13 sectioned along a line XIV-XIV;
FIG. 15 is a close-up view of a position XV shown in FIG. 14;
FIG. 16 is a schematic top view of a plurality of electrode assemblies according to some embodiments of this application;
FIG. 17 is a cross-sectional view of FIG. 16 sectioned along a line XVII-XVII;
FIG. 18 is a close-up view of a position XVIII shown in FIG. 17;
FIG. 19 is a schematic diagram of a method for manufacturing a battery cell according to some embodiments of this application; and
FIG. 20 is a schematic diagram of a device for manufacturing a battery cell according to some embodiments of this application.

List of reference numerals: 10-box; 11-upper box; 12-lower box; 20-battery cell; 21-end cap; 211-end cap body; 212-connecting portion; 213-edge portion; 22-housing; 221-bottom wall; 222-sidewall; 2221-body portion; 2222-end portion; 2222a-first part; 2222b-second part; 2223-first stepped face; 2224-second stepped face; 2225-bulge; 23-electrode assembly; 30-thermal management component; 100-battery; 200-controller; 300-motor; 410-first providing apparatus; 420-second providing apparatus; 430-third providing apparatus; 440-first assembling apparatus; 450-second assembling apparatus; 1000-vehicle.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. The embodiments of this application do not limit the type of the battery cell.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

A battery cell includes an electrode assembly and an electrolyte (such as an electrolytic solution). The electrode assembly includes a positive electrode plate, a negative electrode plate, and a separator. The battery cell works primarily by shuttling metal ions between the positive electrode plate and the negative electrode plate. The separator is disposed between the positive electrode plate and the negative electrode plate to insulate the positive electrode plate from the negative electrode plate and avoid a short circuit.

The battery cell further includes a housing and an end cap. The housing includes an opening. The end cap fits and covers the opening to form a closed space isolated from the external space. The closed space is configured to accommodate the electrode assembly, the electrolyte, and other functional components.

Currently, the market trend shows that batteries are applied more extensively. Batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for batteries keeps soaring with the increase of the application fields of the batteries.

In a production process, an electrode assembly needs to be put into a housing, and then an end cap needs to be connected to the housing. Currently, a battery is packaged by two main methods. One method is to connect an end cap and a housing of the battery by seaming, and the other method is to weld the end cap and the housing by laser welding. A yield rate of batteries packaged by welding is low.

Studies by the inventor hereof show that a reason for the low yield rate of the batteries packaged by welding is that a laser beam irradiates the electrode assembly during the welding and burns the electrode assembly. Specifically, one end of the housing is closed and the other end of the housing is open, and the electrode assembly is accommodated in the housing. When the end cap is welded to the housing, the end cap needs to be fitted onto the open end of the housing to cover the housing, so that an outer peripheral surface of the end cap approaches an inner peripheral surface of the housing to close the open end of the housing. In this way, when the outer peripheral surface of the end cap is welded to the inner peripheral surface of the housing along an axial direction of the housing by laser welding, the laser beam is directly cast into the housing along a gap between the outer peripheral surface of the end cap and the inner peripheral surface of the housing, and irradiates the electrode assembly in the housing, thereby burning the electrode assembly and damaging or breaking the electrode assembly.

Based on the above considerations, the inventor has designed a battery cell after in-depth research. In the battery cell, a first stepped face is formed on an inner wall of the housing so that the first stepped face is opposite to the end cap. In this way, during welding between the outer peripheral surface of the end cap and the inner peripheral surface of the housing, the first stepped face can block the laser beam to prevent the electrode assembly from being burned by the laser irradiation.

The housing includes a sidewall and a bottom wall. The sidewall encloses the bottom wall on all sides. The sidewall and the bottom wall jointly define an accommodation cavity with an opening made at one end. The electrode assembly is disposed in the accommodation cavity. The end cap is configured to cover the opening. The sidewall includes a body portion and an end portion. The body portion is connected to the bottom wall. The end portion is connected to an end of the body portion, the end being away from the bottom wall. An outer peripheral surface of the end cap is welded to an inner surface of the end portion. A first stepped face is formed between the inner surface of the end portion and an inner surface of the body portion. The first stepped face is configured to restrict the end cap from moving closer to the bottom wall, so as to position the end cap during mounting of the end cap.

The battery cell disclosed in this embodiment of this application is applicable to, but without being limited to, electrical devices such as a vehicle, watercraft, or aircraft.

An embodiment of this application provides an electrical device powered by a battery. The electrical device may be, but not limited to, a mobile phone, a tablet, a notebook computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description in the following embodiment, a vehicle 1000 is used as an example of the electrical device disclosed in an embodiment of this application.

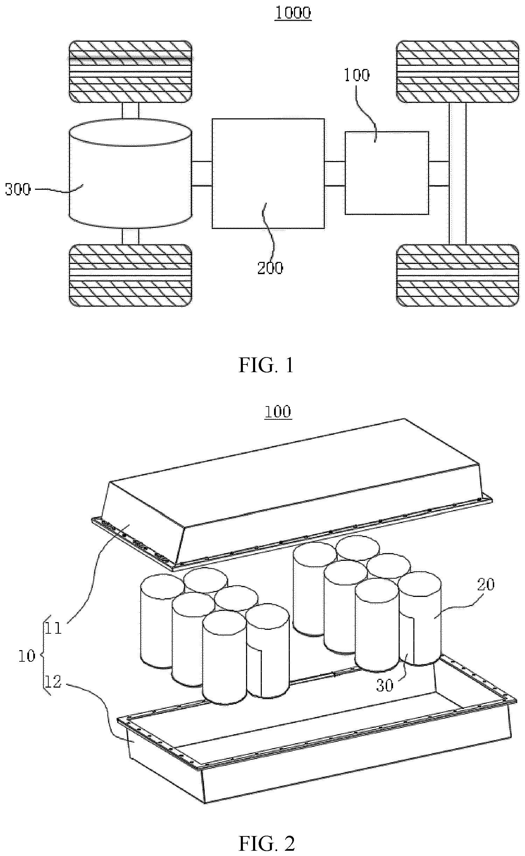

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a drive power supply of the vehicle 1000 to provide driving power for the vehicle 1000 in place of or partly in place of oil or natural gas.

Referring to FIG. 2, FIG. 2 is an exploded view of a battery 100 according to some embodiments of this application. The battery 100 includes a box 10, a battery cell 20, and a thermal management component 30. The battery cell 20 is accommodated in the box 10. The thermal management component 30 fits closely with the battery cell 20. The box 10 is configured to provide an accommodation space for the battery cell 20. The box 10 may be in various structures. In some embodiments, the box 10 may include an upper box 11 and a lower box 12. The upper box 11 and the lower box 12 fit and cover each other. The upper box 11 and the lower box 12 jointly define an accommodation space configured to accommodate the battery cell 20. The lower box 12 may be a hollow structure opened at one end. The upper box 11 may be a plate-like structure. The upper box 11 fits an opening end of the lower box 12 so that the upper box 11 and the lower box 12 together define the accommodation space. Alternatively, both the upper box 11 and the lower box 12 may be hollow structures opened at one end. The opening end of the upper box 11 fits the opening end of the lower box 12. Definitely, the box 10 formed by the upper box 11 and the lower box 12 may be in various shapes such as a cylinder or a cuboid.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, the plurality of battery cells 20 may be connected in series, parallel, or series-and-parallel pattern to form a battery 100 in the form of battery modules first. A plurality of battery modules are then connected in series, parallel, or series-and-parallel pattern to form a whole for being accommodated in the box 10. The battery 100 may further include other structures. For example, the battery 100 may further include a busbar component. The busbar component is configured to implement electrical connection between the plurality of battery cells 20.

Each battery cell 20 may be, but without being limited to, a secondary battery or primary battery; or may be a lithium-sulfur battery, a sodium-ion battery, or a magnesium-ion battery. The battery cell 20 may be in the shape of a cylinder, flat body, cuboid, or the like.

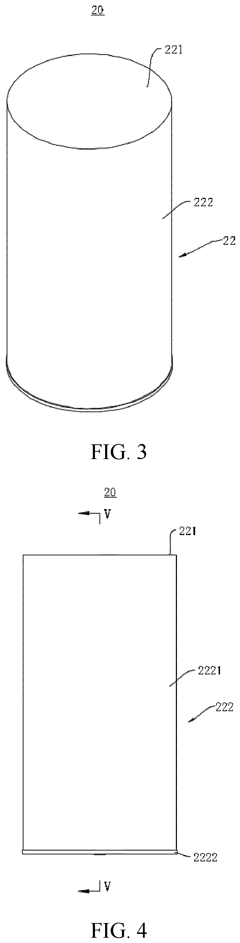

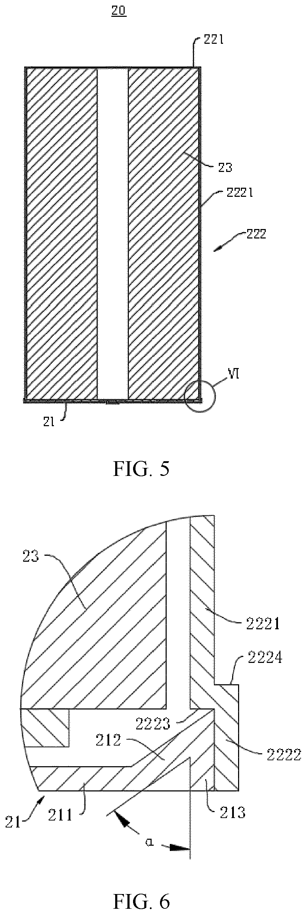

Referring to FIG. 3, FIG. 4, FIG. 5, and FIG. 6, FIG. 3 is an overall schematic diagram of a battery cell 20 according to some embodiments of this application; FIG. 4 is a schematic front view of a battery cell 20 according to some embodiments of this application; and FIG. 5 is a cross-sectional view of FIG. 4 sectioned along a line V-V. The battery cell 20 includes an end cap 21, a housing 22, an electrode assembly 23, and other functional components.

The end cap 21 is a component that fits and covers the opening of the housing 22 to isolate the internal environment of the battery cell 20 from the external environment. Without limitation, the shape of the end cap 21 may be adapted to the shape of the housing 22 to fit the housing 22. Optionally, the end cap 21 may be made of a material of appropriate hardness and strength (such as aluminum alloy), so that the end cap 21 is not prone to deform when squeezed or impacted. In this way, the battery cell 20 achieves higher structural strength and higher safety performance. In some embodiments, a pressure relief mechanism configured to release an internal pressure when the internal pressure or temperature of the battery cell 20 reaches a threshold, such as a pressure relief valve, may be further disposed on the end cap 21. The end cap 21 may also be made of a variety of materials such as copper, iron, aluminum, stainless steel, aluminum alloy, or plastic, without being particularly limited herein. In some embodiments, an insulation piece may be further disposed on an inner side of the end cap 21. The insulation piece may be configured to isolate an electrically connected component in the housing 22 from the end cap 21 to reduce short-circuit risks. For example, the insulation piece may be plastic, rubber, or the like.

The housing 22 is a component configured to fit the end cap 21 to form an internal environment of the battery cell 20. The formed internal environment may be used to accommodate the electrode assembly 23, an electrolytic solution, and other components. The housing 22 and the end cap 21 may be stand-alone components. An opening may be made on the housing 22. At the opening, the end cap 21 fits with the opening to form the internal environment of the battery cell 20. Without limitation, the end cap 21 and the housing 22 may be integrated instead. Specifically, the end cap 21 and the housing 22 may form a common connection interface before other components are put into the housing. Subsequently, when the interior of the housing 22 needs to be sealed, the end cap 21 is made to fit with the housing 22. The housing 22 may be in various shapes and sizes, such as a cuboid, cylinder, or hexagonal prism. Specifically, the shape of the housing 22 may be determined depending on the specific shape and size of the electrode assembly 23. The housing 22 may be made of a variety of materials such as copper, iron, aluminum, stainless steel, aluminum alloy, or plastic, without being particularly limited herein.

The electrode assembly 23 is a component that reacts electrochemically in the battery cell 20. The housing 22 may contain one or more electrode assemblies 23. The electrode assembly 23 is typically formed of a positive electrode plate and a negative electrode plate that are wound or stacked together. Generally, a separator is disposed between the positive electrode plate and the negative electrode plate. The parts, coated with an active material, of the positive electrode plate and the negative electrode plate, constitute a body portion of the electrode assembly 23. The part, coated with no active material, of the positive electrode plate and the negative electrode plate separately, constitutes a tab. The positive tab and the negative tab may be located at one end of the body portion together or at two ends of the body portion respectively.

Referring to FIG. 3, FIG. 4, FIG. 5, and FIG. 6, FIG. 6 is a close-up view of a position VI shown in FIG. 5. An embodiment of this application provides a battery cell 20. The battery cell 20 includes an end cap 21, a housing 22, and an electrode assembly 23. The housing 22 includes a sidewall 222 and a bottom wall 221. The sidewall 222 encloses the bottom wall 221 on all sides. The sidewall 222 and the bottom wall 221 jointly define an accommodation cavity with an opening made at one end. The electrode assembly 23 is disposed in the accommodation cavity. The end cap 21 is configured to cover the opening. The sidewall 222 includes a body portion 2221 and an end portion 2222. The body portion 2221 is connected to the bottom wall 221. The end portion 2222 is connected to an end of the body portion 2221, the end being away from the bottom wall 221. An outer peripheral surface of the end cap 21 is welded to an inner surface of the end portion 2222. A first stepped face 2223 is formed between the inner surface of the end portion 2222 and an inner surface of the body portion 2221. The first stepped face 2223 is configured to restrict the end cap 21 from moving closer to the bottom wall 221.

The bottom wall 221 and the sidewall 222 may be formed in one piece.

The end portion 2222 is located at an end of the sidewall 222, the end being away from the bottom wall 221. The opening of the housing 22 is formed at the end portion 2222, and the opening is opposite to the bottom wall 221. The sidewall 222 includes an inner surface and an outer surface. The inner surface is relatively close to a central axis of the housing 22, and the outer surface is relatively far away from the central axis of the housing 22. The inner surface of the sidewall 222 includes an inner surface of the end portion 2222 and an inner surface of the body portion 2221.

The inner surface of the end portion 2222 is far away from the central axis of the housing 22 relative to the inner surface of the body portion 2221, so as to form a first stepped face 2223 between the inner surface of the end portion 2222 and the inner surface of the body portion 2221. The first stepped face 2223 connects the inner surface of the end portion 2222 and the inner surface of the body portion 2221.

The end cap 21 is connected to the sidewall 222 to close the opening of the accommodation cavity and form an internal environment of the battery cell 20.

The outer peripheral surface of the end cap 21 is a surface farthest away from the central axis of the end cap 21. The end cap 21 includes a first surface oriented toward the electrode assembly 23. The central axis of the end cap 21 is perpendicular to the first surface, and runs through the center of the first surface.

As an example, the housing 22 is cylindrical, and the shape of the end cap 21 fits the housing 22. Referring to FIG. 3 together with FIG. 4, both the end portion 2222 and the body portion 2221 are cylindrical. The axis of the end portion 2222 coincides with the axis of the body portion 2221. An inside diameter of the end portion 2222 is larger than an inside diameter of the body portion 2221. Therefore, in the radial direction of the housing 22, a dimensional difference exists between the inner surface of the body portion 2221 and the inner surface of the end portion 2222, so as to form a first stepped face 2223. The first stepped face 2223 is a circular surface oriented toward the opening.

During assembling, the first stepped face 2223 restricts the end cap 21 from moving closer to the bottom wall 221, so as to define the position of the end cap 21, thereby facilitating the assembling and improving the precision and efficiency of assembling.

During welding of the end cap 21 to the end portion 2222, the laser beam is radiated parallel to the central axis of the end cap 21. In this way, the outer peripheral surface of the end cap 21 is welded to the inner surface of the end portion 2222, and the first stepped face 2223 blocks the laser beam in the propagation direction of the laser beam, so as to prevent the laser beam from directly irradiating the electrode assembly 23 and damaging the electrode assembly 23.

In addition, by exerting a limiting effect, the first stepped face 2223 can prevent the end cap 21 from excessively pressing the electrode assembly 23, prevent the electrode assembly 23 from being overstressed and damaged, avoid lithium plating caused by detachment of active material coating (that is, detachment of the active material applied on the electrode plate), and improve safety performance of the battery cell 20.

In some embodiments of this application, the end cap 21 abuts against the first stepped face 2223.

"The end cap 21 abuts against the first stepped face 2223" means that the end cap 21 is pressed against the first stepped face 2223 and is in contact with the first stepped face 2223 by exerting a contact force. In this way, no clearance exists between the end cap 21 and the first stepped face 2223, so that the end cap 21 closes the accommodation cavity of the housing 22.

When the battery cell 20 is arranged with the bottom wall 221 down and the end cap 21 up, the end cap 21 abuts against the first stepped face 2223, and the first stepped face 2223 exerts a supporting effect on the end cap 21.

Metal vapor is generated during the laser welding. By letting the end cap 21 abut against the first stepped face 2223, a gap is avoided between the end cap 21 and the first stepped face 2223, thereby restricting the metal vapor from entering the accommodation cavity, and preventing the metal vapor from damaging the electrode assembly 23 in the accommodation cavity.

In some embodiments of this application, the end cap 21 includes an end cap body 211, an edge portion 213, and a connecting portion 212. The end cap body 211 is connected to the edge portion 213 by the connecting portion 212. An outer peripheral surface of the edge portion 213 is connected to the inner surface of the end portion 2222. The connecting portion 212 extends outward from the end cap body 211 along a radial direction of the housing 22 and toward the bottom wall 221. The edge portion 213 extends away from the bottom wall 221 from the connecting portion 212.

Referring to FIG. 6, the edge portion 213 is a part, on the end cap 21, close to the edge of the end cap 21 and configured to be connected to the inner surface of the end portion 2222. The end cap body 211 is a main part, on the end cap 21, close to the middle of the end cap 21 and configured to close the housing 22. The connecting portion 212 is a part that connects the edge portion 213 and the end cap body 211 on the end cap 21. The outer peripheral surface of the edge portion 213 is the outer peripheral surface of the end cap 21.

As an example, the end cap body 211 is disc-shaped, and the edge portion 213 is cylindrical. The connecting portion 212 extends obliquely from the end cap body 211, and is connected to an upper end of the edge portion 213. In this way, a projection of the edge portion 213 on a plane in which the end cap body 211 is located falls outside the end cap body 211. In an axial direction of the housing 22, a distance between the end cap body 211 and the bottom wall 221 is longer than a distance between the edge portion 213 and the bottom wall 221.

The connecting portion 212 connects the end cap body 211 and the edge portion 213. In the axial direction of the housing 22, the edge portion 213 is closer to the bottom wall 221 than the end cap body 211. This is equivalent to forming a recess on a side close to the bottom wall 221 on the end cap 21, thereby increasing the space enclosed by the end cap 21 and the housing 22, and increasing the energy density of the battery cell 20.

In some embodiments of this application, along a direction away from the bottom wall 221, a side of the end cap body 211, away from the bottom wall 221, does not protrude beyond the end portion 2222.

That a side of the end cap body 211, away from the bottom wall 221, does not protrude beyond the end portion 2222 means: a surface of the end cap body 211, which is away from the bottom wall 221, is closer to the bottom wall 221 than a surface of the end portion 2222, which is away from the bottom wall 221; or, a surface of the end cap body 211, which is away from the bottom wall 221, is flush with a surface of the end portion 2222, which is away from the bottom wall 221.

The side of the end cap body 211, away from the bottom wall 221, is caused not to protrude beyond the end portion 2222, so that the battery cell 20 is more compact without wasting space in a box 10 when the battery cell 20 is put into the box 10. For example, if the side of the end cap body 211, away from the bottom wall 221, protrudes beyond the end portion 2222, an unusable gap is generated between the box 10 and the end portion 2222 when the battery cell 20 is put into the box 10, thereby wasting the space in the box 10.

In some embodiments of this application, a side of the end cap body 211, away from the bottom wall 221, is flush with the end portion 2222.

That a side of the end cap body 211, away from the bottom wall 221, is flush with the end portion 2222 means: a surface of the end cap body 211, which is away from the bottom wall 221, is flush with a surface of the end portion 2222, which is away from the bottom wall 221, so as to achieve an aesthetically pleasing appearance of the battery cell 20.

The side of the end cap body 211, away from the bottom wall 221, is caused to be flush with the end portion 2222, so that the battery cell 20 is more compact without wasting space in the box 10 when the battery cell 20 is put into the box 10. In addition, when the side of the end cap body 211, away from the bottom wall 221, is flush with the end portion 2222, the end cap body 211 and the end portion 2222 can jointly support the battery cell 20, so that the battery cell 20 is not prone to fall askew. Moreover, the end cap 21 can be positioned onto the end portion 2222 with more ease during the mounting.

In some embodiments of this application, referring to FIG. 6, the outer surface of the end portion 2222 protrudes beyond the outer surface of the body portion 2221, and a first stepped face 2223 is formed on the inner surface of the housing 22. The first stepped face 2223 may be formed by bending the sidewall 222. The sidewall 222 bent along the radial direction of the housing 22 causes the end portion 2222 to protrude beyond the body portion 2221, so as to form the first stepped face 2223 at the bend position (the first stepped face 2223 is located on the inner surface of the housing 22). Specifically, the sidewall 222 is bent so that the sidewall 222 extends along the radial direction of the housing 22 first, and then extends along the axial direction of the housing 22. After the bending, the part extending along the axial direction of the housing 22 forms the end portion 2222, and the part extending along the radial direction of the housing 22 forms the first stepped face 2223. The bending of the sidewall 222 forms the first stepped face 2223 at the bend position, and makes it easy to process the housing 22.

In some embodiments of this application, the housing 22 may be formed by casting. That is, the bottom wall 221, the body portion 2221, and the end portion 2222 may be formed in one piece.

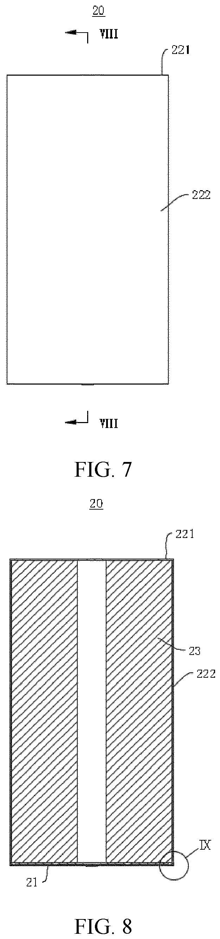

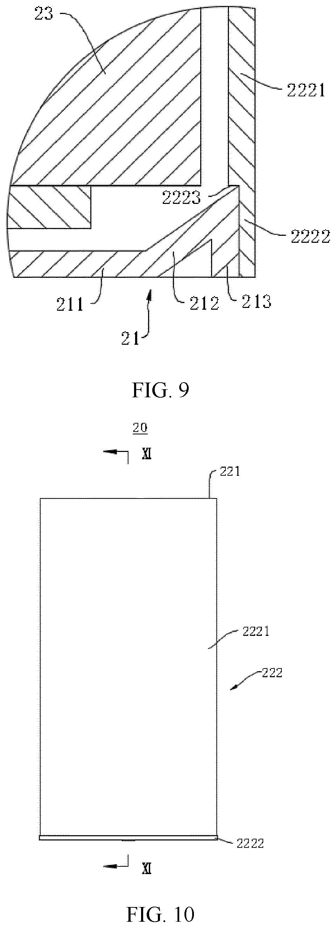

Referring to FIG. 7, FIG. 8, and FIG. 9, FIG. 7 is a schematic front view of a battery cell 20 according to some other embodiments of this application; FIG. 8 is a cross-sectional view of FIG. 7 sectioned along a line VIII-VIII; and FIG. 9 is a close-up view of a position IX shown in FIG. 8. In some other embodiments of this application, the first stepped face 2223 may be formed by thinning the sidewall 222. Specifically, the sidewall 222 is thinned at the end portion 2222 to form the first stepped face 2223 at a junction between the end portion 2222 and the body portion 2221.

"The sidewall 222 is thinned at the end portion 2222" means: the thickness of the body portion 2221 is greater than the thickness of the end portion 2222, the inside diameter of the end portion 2222 is greater than the inside diameter of the body portion 2221, and the outside diameter of the end portion 2222 is equal to the outside diameter of the body portion 2221.

The thinning of the housing 22 at the end portion 2222 makes the inside diameter of the end portion 2222 greater than the inside diameter of the body portion 2221, so as to form the first stepped face 2223. The outside diameter of the end portion 2222 is equal to the outside diameter of the body portion 2221, so that no step is formed on the outer peripheral surface of the housing 22, and the impact on other structures is relatively small (for example, the existing box 10 does not need to be modified).

It is hereby noted that the housing 22 of the same structure may be manufactured by casting. Although a manufacturing method is provided in an embodiment of this application, the above manufacturing method is not to be construed as a limitation on this application.

Optionally, the first stepped face 2223 is parallel to an end of the electrode assembly 23, the end being close to the end cap 21.

In some embodiments of this application, the thickness of the body portion 2221 and the thickness of the end cap 21 are both 0.25 mm, and the length of the first stepped face 2223 falls within a range of 0.05 to 0.2 mm, for example, is 0.1 mm. In an embodiment in which the end portion 2222 is formed by thinning the sidewall 222, the thickness of the end portion 2222 may be 0.15 mm. It is hereby noted that the thickness of the end portion 2222 needs to meet a strength requirement of the battery cell 20 and ensure the ability to limit the position of the end cap 21, so as to avoid damage to the end portion 2222 when the internal pressure of the battery cell 20 increases.

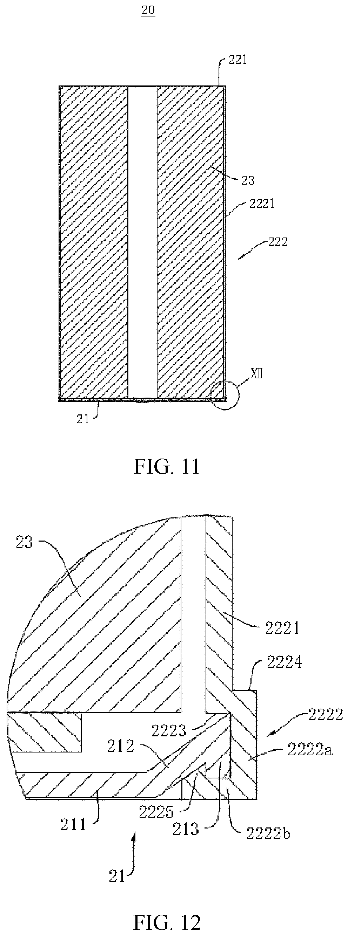

Referring to FIG. 10, FIG. 11, and FIG. 12, FIG. 10 is a schematic front view of a battery cell 20 according to some other embodiments of this application; FIG. 11 is a cross-sectional view of FIG. 10 sectioned along a line XI-XI; and FIG. 12 is a close-up view of a position XII shown in FIG. 11. In an embodiment in which the outer surface of the end portion 2222 protrudes beyond the outer surface of the body portion and the first stepped face 2223 is formed on the inner surface of the housing 22, the end portion 2222 includes a first part 2222a and a second part 2222b. The second part 2222b is connected to the body portion 2221 by the first part 2222a. The first part 2222a extends away from the bottom wall 221 from the body portion 2221. The outer peripheral surface of the end cap 21 is welded to the inner surface of the first part 2222a. The second part 2222b extends inward from the first part 2222a along the radial direction of the housing 22 and covers a weld position between the end cap 21 and the first part 2222a.

The housing 22 is cylindrical. The first part 2222a extends along the axial direction of the housing 22. One end of the first part 2222a is connected to the body portion 2221. The other end of the first part 2222a is connected to the second part 2222b. The inner peripheral surface of the first part 2222a is configured to be welded to the outer peripheral surface of the end cap 21, and specifically, welded to the outer peripheral surface of the edge portion 213.

The second part 2222b extends toward the central axis of the housing 22 along the radial direction of the housing 22. One end of the second part 2222b is connected to one end of the first part 2222a, the end being away from the body portion 2221, so as to shield the weld position between the end cap 21 and the first part 2222a.

The weld position is prone to rust due to exposure to moisture in the air. The second part 2222b is extended inward from the first part 2222a along the radial direction of the housing 22 to shield the weld position between the end cap 21 and the first part 2222a, protect the weld position, reduce the possibility of exposing the weld position to the moisture in the air, and prolong the service life of the battery cell 20.

In some embodiments of this application, a bulge 2225 is formed at an end of the second part 2222b, the end being away from the first part 2222a. The bulge 2225 is hooked to a side of the edge portion 213, the side being oriented toward the connecting portion 212.

A recessed portion is formed between the inner surface of the edge portion 213 and the outer surface of the connecting portion 212. A bulge 2225 is formed at an end of the second part 2222b, the end being away from the first part 2222a. The bulge 2225 extends into the recessed portion, and is hooked to a side of the edge portion 213, the side being oriented toward the connecting portion 212.

The second part 2222b is caused to shield the weld position between the end cap 21 and the first part 2222a, so that the bulge 2225 is hooked to the side of the edge portion 213, the side being oriented toward the connecting portion 212, thereby improving the effect of shielding the weld position between the end cap 21 and the first part 2222a, further reducing the possibility of exposing the weld position to the moisture in the air, and prolonging the service life of the battery cell 20.

In some embodiments of this application, a nick is made on the inner surface of the end portion 2222. The nick is located between the first part 2222a and the second part 2222b.

The nick means a mark made on the inner wall face of the end portion 2222, that is, in a relatively thin region of the end portion 2222, to reduce difficulty of bending the end portion 2222.

The nick is made between the first part 2222a and the second part 2222b, so that the first part 2222a and the second part 2222b can be formed by just bending the end portion 2222 at the nicked position during manufacturing. With the nick made, it is easy to ensure that the position of the first part 2222a and the position of the second part 2222b are consistent between a plurality of housings 22 manufactured, thereby ensuring consistency of the process. In addition, by adjusting the position of the nick, the dimensions of the second part 2222b can be adjusted.

Optionally, a nick is also made between the bulge 2225 and the second part 2222b. The second part 2222b and the bulge 2225 can be formed by just bending the end portion 2222 at the nicked position during manufacturing. With the nick made, it is easy to ensure that the position of the second part 2222b and the position of the bulge 2225 are consistent between a plurality of housings 22 manufactured, thereby ensuring consistency of the process. In addition, by adjusting the position of the nick, the dimensions of the bulge 2225 can be adjusted.

In some embodiments of this application, the battery cell 20 further includes a sealing layer. The sealing layer is located between the second part 2222b and the edge portion 213.

The sealing layer is a structure that serves a function of sealing. Optionally, the sealing layer is formed by applying glue between the second part 2222b and the edge portion 213.

The sealing layer is disposed between the second part 2222b and the edge portion 213 to isolate the weld position from the air, avoid rust generated at the weld position due to contact with the moisture in the air, and prolong the service life of the battery cell 20.

In some other embodiments of this application, the sealing layer is disposed between the edge portion 213 and the bulge 2225. The sealing layer is formed by applying glue between the edge portion 213 and the bulge 2225, so as to isolate the weld position from the air, avoid rust generated at the weld position due to contact with the moisture in the air, and prolong the service life of the battery cell 20.

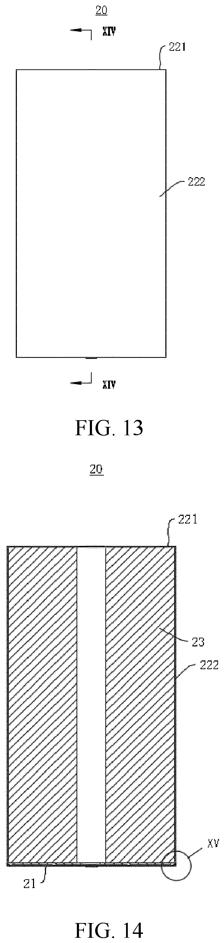

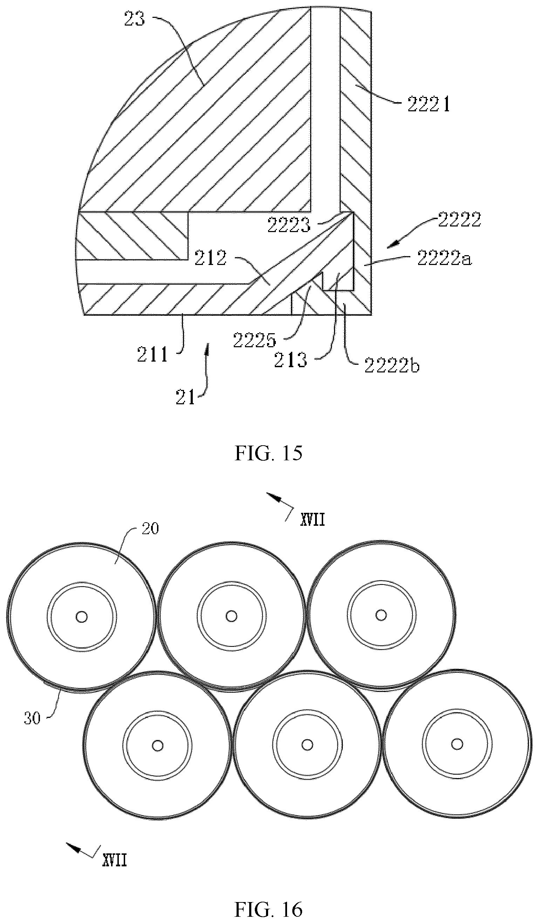

Referring to FIG. 13, FIG. 14, and FIG. 15, FIG. 13 is a schematic front view of a battery cell 20 according to still other embodiments of this application; FIG. 14 is a cross-sectional view of FIG. 13 sectioned along a line XIV-XIV; and FIG. 15 is a close-up view of a position XV shown in FIG. 14. In an embodiment in which the first stepped face 2223 is formed by thinning the sidewall 222, the end portion 2222 includes a first part 2222a and a second part 2222b. The second part 2222b is connected to the body portion 2221 by the first part 2222a. The first part 2222a extends away from the bottom wall 221 from the body portion 2221. The outer peripheral surface of the end cap 21 is welded to the inner surface of the first part 2222a. The second part 2222b extends inward from the first part 2222a along the radial direction of the housing 22 and covers a weld position between the end cap 21 and the first part 2222a.

The first part 2222a extends along the axial direction of the housing 22. One end of the first part 2222a is connected to the body portion 2221. The other end of the first part 2222a is connected to the second part 2222b. The inner peripheral surface of the first part 2222a is configured to be welded to the outer peripheral surface of the end cap 21, and specifically, welded to the outer peripheral surface of the edge portion 213. The second part 2222b extends along the radial direction of the housing 22. One end of the second part 2222b is connected to one end of the first part 2222a, the end being away from the body portion 2221. The second part 2222b is configured to shield a weld position between the end cap 21 and the first part 2222a.

The weld position is prone to rust due to exposure to moisture in the air. The second part 2222b is extended inward from the first part 2222a along the radial direction of the housing 22 to shield the weld position between the end cap 21 and the first part 2222a, protect the weld position, reduce the possibility of exposing the weld position to the moisture in the air, and prolong the service life of the battery cell 20.

In some embodiments of this application, a bulge 2225 is formed at an end of the second part 2222b, the end being away from the first part 2222a. The bulge 2225 is hooked to a side of the edge portion 213, the side being oriented toward the connecting portion 212.

Specifically, a recess is formed between the inner surface of the edge portion 213 and the outer surface of the connecting portion 212. A bulge 2225 is formed at an end of the second part 2222b, the end being away from the first part 2222a. The bulge 2225 extends into the recess, and is hooked to a side of the edge portion 213, the side being oriented toward the connecting portion 212.

The second part 2222b is caused to shield the weld position between the end cap 21 and the first part 2222a, so that the bulge 2225 is hooked to the side of the edge portion 213, the side being oriented toward the connecting portion 212, thereby improving the effect of shielding the weld position between the end cap 21 and the first part 2222a, further reducing the possibility of exposing the weld position to the moisture in the air, and prolonging the service life of the battery cell 20.

In some embodiments of this application, an angle between the connecting portion 212 and the edge portion 213 is α, satisfying 30° ≤ α ≤ 65°.

As shown in FIG. 6, the angle α between the connecting portion 212 and the edge portion 213 is an angle between the outer surface of the connecting portion 212 and the inner surface of the edge portion 213. The angle α between the connecting portion 212 and the edge portion 213 affects the degree of inclination of the connecting portion 212. The larger the angle α between the connecting portion 212 and the edge portion 213, the lower the degree of inclination of the connecting portion 212, and in turn, the closer the end cap body 211 is to the bottom wall 221. The smaller the angle α between the connecting portion 212 and the edge portion 213, the higher the degree of inclination of the connecting portion 212, and in turn, the closer the connecting portion 212 is to the axis of the housing 22.

If the angle α between the connecting portion 212 and the edge portion 213 is less than 30°, the connecting portion 212 is excessively close to the axis of the housing 22, and may block a current collection plate of the battery cell 20. If the angle α between the connecting portion 212 and the edge portion 213 is larger than 65°, a distance between the end cap body 211 and the bottom wall 221 is relatively small, that is, the space enclosed by the end cap 21 and the body portion 2221 is relatively small. Therefore, the energy density of the battery cell 20 is relatively low.

Optionally, the angle α between the connecting portion 212 and the edge portion 213 is 54.8°. In this case, the energy density of the battery cell 20 is relatively high, and a relatively large gap exists between the connecting portion 212 and the current collection plate of the battery cell 20, without blocking the current collection plate of the battery cell 20. It is hereby noted that the angle α between the connecting portion 212 and the edge portion 213 also affects a distance between the end cap body 211 and a lower end of the edge portion 213. If the angle α between the connecting portion 212 and the edge portion 213 is deficient, the distance between the end cap body 211 and the lower end of the edge portion 213 is relatively short. Consequently, the bulge 2225 is unable to be hooked to a side of the edge portion 213, the side being oriented toward the connecting portion 212. Optionally, the distance between the end cap body 211 and the lower end of the edge portion 213 is greater than 0.25 mm, so as to allow the bulge 2225 to be hooked to the side of the edge portion 213, the side being oriented toward the connecting portion 212. For example, the distance between the end cap body 211 and the lower end of the edge portion 213 is greater than 0.5 mm.

An embodiment of this application further provides a battery 100. The battery 100 includes the battery cell 20 according to any one of the technical solutions described above.

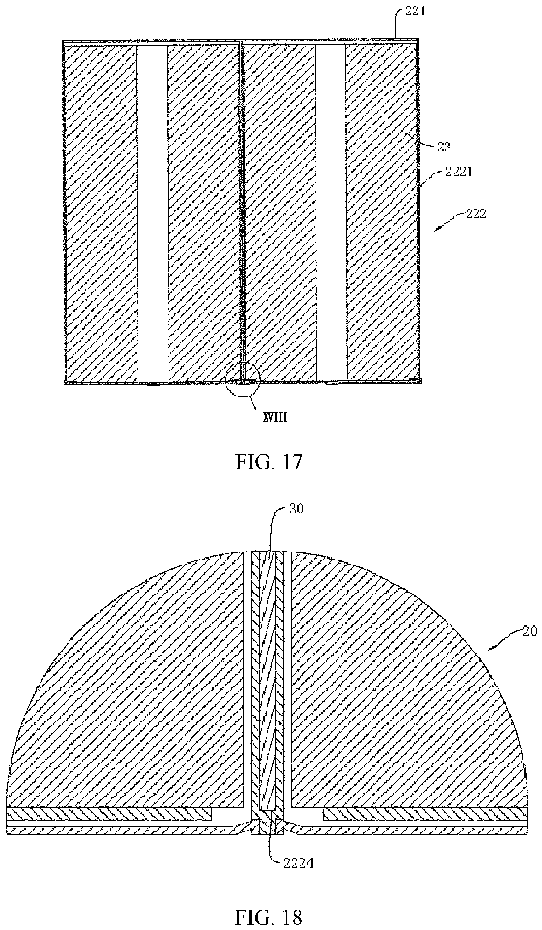

Referring to FIG. 16, FIG. 17, and FIG. 18, FIG. 16 is a schematic top view of a plurality of electrode assemblies 23 according to some embodiments of this application; FIG. 17 is a cross-sectional view of FIG. 16 sectioned along a line XVII-XVII; and FIG. 18 is a close-up view of a position XVIII shown in FIG. 17. In some embodiments of this application, an outer surface of the end portion 2222 protrudes beyond an outer surface of the body portion 2221 to form a second stepped face 2224 between the outer surface of the end portion 2222 and the outer surface of the body portion 2221. The battery 100 further includes a thermal management component 30. The thermal management component 30 is positioned on the second stepped face 2224 and is in contact with the outer surface of the body portion 2221.

The sidewall 222 is bent along a radial direction of the housing 22 so that the end portion 2222 protrudes beyond the body portion 2221, so as to form a second stepped face 2224 at the bend position (the second stepped face 2224 is located on the outer surface of the housing 22). Specifically, the sidewall 222 is bent so that the sidewall 222 extends along the radial direction of the housing 22 first, and then extends along the axial direction of the housing 22. After the bending, the part extending along the axial direction of the housing 22 forms the end portion 2222, and the part extending along the radial direction of the housing 22 forms the second stepped face 2224. It is hereby noted that the first stepped face 2223 is located on the inner surface of the housing 22, and the second stepped face 2224 is located on the outer surface of the housing 22. An outside diameter of the end portion 2222 is greater than an outside diameter of the body portion 2221. The second stepped face 2224 connects the outer surface of the end portion 2222 and the outer surface of the body portion 2221.

The thermal management component 30 is a component configured to adjust a temperature of the battery cell 20. The thermal management component 30 can heat the battery cell 20 and/or cool the battery cell 20 to adjust the temperature of the battery cell 20, so as to leave the battery cell 20 to work in an appropriate temperature environment, and improve the performance of the battery cell 20. In some embodiments, the thermal management component 30 is an electric heating plate. In some other embodiments, the thermal management component 30 is a liquid cooling cold plate. The cross-section of the liquid cooling cold plate is corrugated. The liquid cooling cold plate is positioned on the second stepped face 2224, and is close to outer walls of the housings 22 of the plurality of battery cells 20. Specifically, a plurality of battery cells 20 are arranged in a staggered array. Each battery cell 20 fits closely with the recessed portion of the liquid cooling cold plate. In order to increase the contact area between the liquid cooling cold plate and the battery cells 20, the curvature of the recessed portion of the liquid cooling cold plate is equal to the radius of the housing 22. The length of the liquid cooling cold plate is less than or equal to the length of the body portion 2221, so that the liquid cooling cold plate does not protrude beyond the battery cells 20 in the height direction of the battery cells 20.

The outer surface of the end portion 2222 is caused to protrude beyond the outer surface of the body portion 2221 to form the second stepped face 2224 between the outer surface of the end portion 2222 and the outer surface of the body portion 2221. The second stepped face 2224 may be configured to hold a thermal management component 30 so that the thermal management component 30 can be positioned. Moreover, with the thermal management component 30 positioned on the second stepped face 2224, the thermal management component 30 is enabled to be in contact with the outer surface of the body portion 2221 to facilitate heat exchange between the thermal management component 30 and the electrode assembly 23 in the body portion 2221, so as to control the temperature of the electrode assembly 23.

In some embodiments of this application, a width of the second stepped face 2224 in a radial direction of the housing 22 is less than a half of a thickness of the thermal management component 30.

The width of the second stepped face 2224 in the radial direction of the housing 22 is a difference between the outside diameter of the end portion 2222 and the outside diameter of the body portion 2221. That is, in the radial direction of the housing 22, the end portion 2222 protrudes beyond the length of the body portion 2221.

By causing the width of the second stepped face 2224 in the radial direction of the housing 22 to be less than a half of the thickness of the thermal management component 30, it is convenient to dispose the thermal management component 30 between two battery cells 20, so that the thermal management component 30 fits closely with the body portions 2221 of both battery cells 20 concurrently. When the width of the second stepped face 2224 in the radial direction of the housing 22 is greater than a half of the width of the thermal management component 30, the thermal management component 30 disposed between two battery cells 20 is in close contact with the body portion 2221 of just one battery cell 20, but is in clearance fit with the body portion 2221 of the other battery cell 20.

An embodiment of this application further provides an electrical device. The electrical device includes the battery 100. The battery 100 is configured to supply electrical energy.

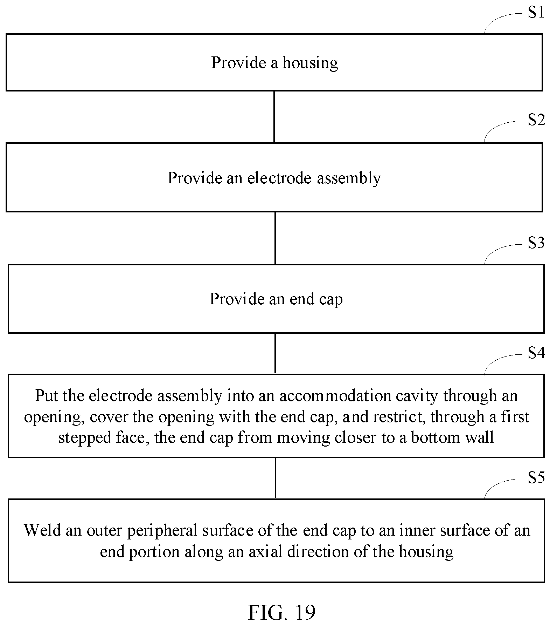

Referring to FIG. 19, an embodiment of this application further provides a method for manufacturing a battery cell 20. The method for manufacturing a battery cell 20 includes:
Step S 1: Providing a housing 22, where the housing 22 includes a sidewall 222 and a bottom wall 221, the sidewall 222 encloses the bottom wall 221 on all sides, the sidewall 222 and the bottom wall 221 jointly define an accommodation cavity with an opening made at one end, the sidewall 222 includes a body portion 2221 and an end portion 2222, the body portion 2221 is connected to the bottom wall 221, the end portion 2222 is connected to an end of the body portion 2221, the end is away from the bottom wall 221, and a first stepped face 2223 is formed between an inner surface of the end portion 2222 and an inner surface of the body portion 2221;
Step S2: Providing an electrode assembly 23;
Step S3: Providing an end cap 21;
Step S4: Putting the electrode assembly 23 into the accommodation cavity through the opening, covering the opening with the end cap 21, and restricting, through the first stepped face 2223, the end cap 21 from moving closer to the bottom wall 221; and
Step S5: Welding an outer peripheral surface of the end cap 21 to the inner surface of the end portion 2222 along an axial direction of the housing 22.

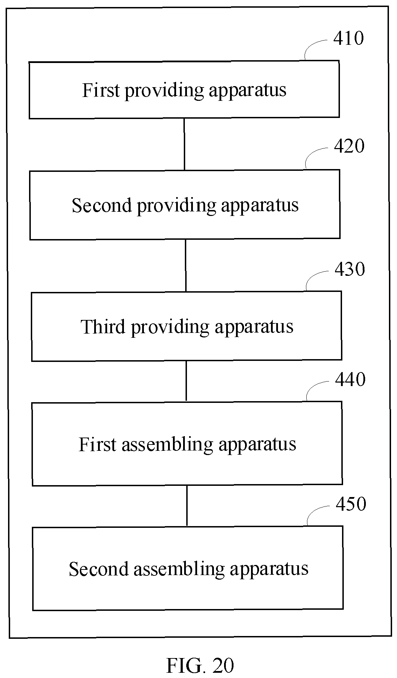

Referring to FIG. 20, an embodiment of this application further provides a device for manufacturing a battery cell 20. The device for manufacturing a battery cell 20 includes: a first providing apparatus 410, a second providing apparatus 420, a third providing apparatus 430, a first assembling apparatus 440, and a second assembling apparatus 450. The first providing apparatus 410 is configured to provide a housing 22. The housing 22 includes a sidewall 222 and a bottom wall 221. The sidewall 222 encloses the bottom wall 221 on all sides. The sidewall 222 and the bottom wall 221 jointly define an accommodation cavity with an opening made at one end. The sidewall 222 includes a body portion 2221 and an end portion 2222. The body portion 2221 is connected to the bottom wall 221. The end portion 2222 is connected to an end of the body portion 2221, the end being away from the bottom wall 221. A first stepped face 2223 is formed between an inner surface of the end portion 2222 and an inner surface of the body portion 2221. The second providing apparatus 420 is configured to provide an electrode assembly 23. The third providing apparatus 430 is configured to provide an end cap 21. The first assembling apparatus 440 is configured to put the electrode assembly 23 into the accommodation cavity through the opening, cover the opening with the end cap 21, and restrict, through the first stepped face 2223, the end cap 21 from moving closer to the bottom wall 221. The second assembling apparatus 450 is configured to weld an outer peripheral surface of the end cap 21 to the inner surface of the end portion 2222 along an axial direction of the housing 22.

According to some embodiments of this application, referring to FIG. 3 to FIG. 15,
the battery cell 20 includes an end cap 21, a housing 22, and an electrode assembly 23. The housing 22 includes a sidewall 222 and a bottom wall 221. The sidewall 222 encloses the bottom wall 221 on all sides. The sidewall 222 and the bottom wall 221 jointly define an accommodation cavity with an opening made at one end. The electrode assembly 23 is disposed in the accommodation cavity. The end cap 21 is configured to cover the opening. The sidewall 222 includes a body portion 2221 and an end portion 2222. The body portion 2221 is connected to the bottom wall 221. The end portion 2222 is connected to an end of the body portion 2221, the end being away from the bottom wall 221. An outer peripheral surface of the end cap 21 is welded to an inner surface of the end portion 2222. A first stepped face 2223 is formed between the inner surface of the end portion 2222 and an inner surface of the body portion 2221. The first stepped face 2223 is configured to restrict the end cap 21 from moving closer to the bottom wall 221.

The sidewall 222 and the bottom wall 221 of the housing 22 define an accommodation cavity configured to accommodate the electrode assembly 23. The electrode assembly 23 is accommodated in the accommodation cavity. The end cap 21 closes off the opening of the accommodation cavity to isolate the electrode assembly 23 from the external environment. The first stepped face 2223 is formed between the inner surface of the end portion 2222 of the housing 22 and the inner surface of the body portion 2221. The end cap 21 is opposite to the first stepped face 2223. The first stepped face 2223 can not only define the position of the end cap 21 during mounting of the end cap 21, but also block out a laser beam during the welding between the outer peripheral surface of the end cap 21 and the inner surface of the end portion 2222, so as to prevent the electrode assembly 23 from being irradiated by the laser beam and avoid burning of the electrode assembly 23.

What is described above is merely exemplary embodiments of this application, but is not intended to limit this application. To a person skilled in the art, various modifications and variations may be made to this application. Any modifications, equivalent replacements, improvements, and the like made without departing from the spirit and principles of this application still fall within the protection scope of this application.

## Claims

1. A battery cell, **characterized in that** the battery cell comprises:
a housing, wherein the housing comprises a sidewall and a bottom wall, the sidewall encloses the bottom wall on all sides, and the sidewall and the bottom wall jointly define an accommodation cavity with an opening made at one end;
an electrode assembly, disposed in the accommodation cavity; and
an end cap, configured to cover the opening,
wherein, the sidewall comprises a body portion and an end portion, the body portion is connected to the bottom wall, the end portion is connected to an end of the body portion, the end is away from the bottom wall, an outer peripheral surface of the end cap is welded to an inner surface of the end portion, a first stepped face is formed between the inner surface of the end portion and an inner surface of the body portion, and the first stepped face is configured to restrict the end cap from moving closer to the bottom wall.

2. The battery cell according to claim 1, **characterized in that** the end cap abuts against the first stepped face.

3. The battery cell according to claim 1 or 2, **characterized in that**, the end cap comprises an end cap body, an edge portion, and a connecting portion; the end cap body is connected to the edge portion by the connecting portion; an outer peripheral surface of the edge portion is connected to the inner surface of the end portion; the connecting portion extends outward from the end cap body along a radial direction of the housing and toward the bottom wall; and the edge portion extends away from the bottom wall from the connecting portion.

4. The battery cell according to claim 3, **characterized in that**, along a direction away from the bottom wall, a side of the end cap body, away from the bottom wall, does not protrude beyond the end portion.

5. The battery cell according to claim 4, **characterized in that**, the side of the end cap body, away from the bottom wall, is flush with the end portion.

6. The battery cell according to any one of claims 3 to 5, **characterized in that**, the end portion comprises a first part and a second part; the second part is connected to the body portion by the first part; the first part extends away from the bottom wall from the body portion; the outer peripheral surface of the end cap is welded to an inner surface of the first part; and the second part extends inward from the first part along the radial direction of the housing and covers a weld position between the end cap and the first part.

7. The battery cell according to claim 6, **characterized in that**, a bulge is formed at an end of the second part, the end being away from the first part; and the bulge is hooked to a side of the edge portion, the side being oriented toward the connecting portion.

8. The battery cell according to claim 6, **characterized in that**, a nick is made on the inner surface of the end portion, and the nick is located between the first part and the second part.

9. The battery cell according to claim 6, **characterized in that**, the battery cell further comprises a sealing layer, and the sealing layer is located between the second part and the edge portion.

10. The battery cell according to any one of claims 3 to 9, **characterized in that** an angle between the connecting portion and the edge portion is α, satisfying 30° ≤ α ≤ 65°.

11. A battery, **characterized in that** the battery comprises the battery cell according to any one of claims 1 to 10.

12. The battery according to claim 11, **characterized in that**, an outer surface of the end portion protrudes beyond an outer surface of the body portion to form a second stepped face between the outer surface of the end portion and the outer surface of the body portion; and
the battery further comprises a thermal management component, the thermal management component is positioned on the second stepped face and is in contact with the outer surface of the body portion.

13. The battery according to claim 12, **characterized in that** a width of the second stepped face in a radial direction of the housing is less than a half of a thickness of the thermal management component.

14. An electrical device, **characterized in that** the electrical device comprises the battery according to any one of claims 11 to 13, and the battery is configured to provide electrical energy.

15. A method for manufacturing a battery cell, **characterized in that** the method for manufacturing a battery cell comprises:
providing a housing, wherein the housing comprises a sidewall and a bottom wall, the sidewall encloses the bottom wall on all sides, the sidewall and the bottom wall jointly define an accommodation cavity with an opening made at one end, the sidewall comprises a body portion and an end portion, the body portion is connected to the bottom wall, the end portion is connected to an end of the body portion, the end is away from the bottom wall, and a first stepped face is formed between an inner surface of the end portion and an inner surface of the body portion;
providing an electrode assembly;
providing an end cap;
putting the electrode assembly into the accommodation cavity through the opening, covering the opening with the end cap, and restricting, through the first stepped face, the end cap from moving closer to the bottom wall; and
welding an outer peripheral surface of the end cap to the inner surface of the end portion along an axial direction of the housing.

16. A device for manufacturing a battery cell, **characterized in that** the device for manufacturing a battery cell comprises:
a first providing apparatus, configured to provide a housing, wherein the housing comprises a sidewall and a bottom wall, the sidewall encloses the bottom wall on all sides, the sidewall and the bottom wall jointly define an accommodation cavity with an opening made at one end, the sidewall comprises a body portion and an end portion, the body portion is connected to the bottom wall, the end portion is connected to an end of the body portion, the end is away from the bottom wall, and a first stepped face is formed between an inner surface of the end portion and an inner surface of the body portion;
a second providing apparatus, configured to provide an electrode assembly;
a third providing apparatus, configured to provide an end cap;
a first assembling apparatus, configured to put the electrode assembly into the accommodation cavity through the opening, cover the opening with the end cap, and restrict, through the first stepped face, the end cap from moving closer to the bottom wall; and
a second assembling apparatus, configured to weld an outer peripheral surface of the end cap to the inner surface of the end portion along an axial direction of the housing.
